# EUROPÄISCHE PATENTSCHRIFT

(11) **EP 2 998 240 B1**
(45) Veröffentlichungstag und Bekanntmachung des Hinweises auf die Patenterteilung: **17.05.2017**
(21) Anmeldenummer: 15178765.2
(22) Anmeldetag: 29.07.2015
(51) Int. Cl.: B65D 83/00, B29C 49/06

(54) **SPENDER MIT BEUTEL**
DISPENSER WITH BAG
DISTRIBUTEUR DOTÉ DE SAC

(30) Priorität: 19.09.2014 DE 102014113535
(43) Veröffentlichungstag der Anmeldung: 23.03.2016
(73) Patentinhaber: INOTECH Kunststofftechnik GmbH, 92507 Nabburg (DE)
(72) Erfinder: Gleixner, Josef, 92507 Nabburg (DE)
(74) Vertreter: Hannke, Christian

(56) Entgegenhaltungen:
- EP-A1- 2 159 031
- WO-A1-92/12926
- WO-A2-2014/017910
- US-A1- 2008 257 883

## Beschreibung

Die vorliegende Erfindung betrifft in einem ersten Aspekt einen Spenderbehälter bestehend aus einem Außenbehälter und einem Innenbehälter zum Aufnehmen eines Fluids, wobei der Außenbehälter und der Innenbehälter aus blasgeformten Kunststoffen gebildet sind, die keine stoffschlüssige Verbindung miteinander eingehen und ein erster Kunststoff, aus dem der Innenbehälter gebildet ist, eine höhere Elastizität als ein zweiter Kunststoff, aus dem der Außenbehälter gebildet ist, aufweist, so dass der Innenbehälter durch einen erzeugten Unterdruck verformbar ist, wobei der Spenderbehälter einen Mündungsbereich, einen Mittelbereich und einen Bodenbereich aufweist, und wobei der Außenbehälter wenigstens eine Druckausgleichsöffnung zum Druckausgleich im Bereich zwischen dem Außenbehälter und dem Innenbehälter aufweist.

Ein derartiger Spenderbehälter wird beispielsweise zur dosierten Abgabe von kosmetischen oder medizinischen Fluiden verwendet. Es ist auch denkbar, dass Chemikalien wie Säuren oder Basen in solchen Spenderbehältern aufbewahrt werden und somit im Bereich der Großchemie eine Anwendung finden. Zur Abgabe des Fluids wird ein Unterdruck, beispielsweise durch eine Pumpe an dem Innenbeutel angelegt. Da der Innenbeutel aus einem Kunststoff mit einer höheren Elastizität als der Kunststoff des Außenbehälters gebildet ist, verformt sich der Innenbeutel durch den Unterdruck und das Fluid wird abgegeben. Durch das Zusammenziehen des Innenbeutels entsteht im Bereich zwischen Innenbeutel und Außenbeutel ein Unterdruck. Ein solcher Unterdruck beeinträchtigt den Entleerungsvorgang des Innenbeutels. Zur Abgabe des Fluids wäre ein größerer Unterdruck d.h. ein stärkeres Pumpen notwendig. Dies ist zum einen unbequem für den Benutzer und zum anderen können größere Drücke die Permeabilität des Innenbehälters beeinflussen bzw. den Innenbehälter unnötig mechanisch belasten. Es ist somit erforderlich Druckausgleichsöffnungen in dem Außenbehälter anzubringen, die eine Belüftung des Bereichs zwischen Innenbehälter und Außenbehälter ermöglichen.

Durch die Aufbewahrung des Fluids in einem derartigen Innenbeutel ist das Fluid besonders geschützt. Solche Spenderbehälter erlauben eine genaue Dosierung selbst bei Fluiden mit hohen Viskositäten und es bleibt nur eine geringe nicht ausführbare Restmenge im Behältnis enthalten. Ferner kann bei derartigen Spenderbehältern das Fluid ausgeführt werden unabhängig von der Orientierung des Behälters. Es ist also ein 360° Anwendung möglich.

In einem weiteren Aspekt betrifft die Erfindung ein Spritzblasverfahren zum Herstellen eines solchen Spenderbehälters bestehend aus einem Außenbehälter und einem Innenbehälter zum Aufnehmen eines Fluids.

Schließlich betrifft die Erfindung eine Vorrichtung zur Herstellung eines Spenderbehälters, bestehend aus einem Außenbehälter und einem Innenbehälter zum Aufnehmen eines Fluids, im Spritzblasverfahren.

Gattungsgemäße Spenderbehälter sind DE 3442092 A1 bekannt. Der Spenderbehälter wird darin durch das Coextrusionsblasverfahren hergestellt. Bei diesem Verfahren wird ein schlauchartiger Vorformling bestehend aus zwei Schichten in eine zweitteilige Blasform eingebracht. Zunächst wird durch Schließen der Blasform das Überschussmaterial des Vorformlings abgequetscht. Anschließend wird der Vorformling durch einen Blasvorgang zu der endgültigen Form expandiert. Durch das Schließen der Blasform wird der Innenbehälter durch eine Schweißnaht verschlossen. Da sich der Innenbehälter im Quetschbereich zwischen der, die Wandbereiche des Außenbehälters bildenden Schicht befindet wird diese nicht verschweißt. Diese offene Bodennaht im Außenbehälter bildet die Druckausgleichsöffnung für den Behälter.

Ein solcher Behälter hat den Nachteil, dass derartige Schweißnähte Undichtigkeiten aufzeigen. Des Weiteren weist der beschriebene Außenbehälter keine Bodenschweißnaht auf. Somit können ungewollte Fremdstoffe in den Außenbehälter eindringen und der Innenbehälter könnte gar beschädigt werden.

In der DE 41 39 555 A1 wird ein gattungsgemäßer Spenderbehälter offenbart der ebenfalls durch ein Coextrusionsblasverfahren hergestellt wird. Durch ein geringfügiges Zusammenziehen des Innenbehälters beim Quetschvorgang werden sowohl der Innenbehälter als auch der Außenbehälter im Bodenbereich durch eine Schweißnaht verschlossen, wobei die Schweißnaht des Innenbehälters in die Schweißnaht des Außenbehälters eingeklemmt ist. Der Spenderbehälter weist im Schulterbereich offene Schweißnahtstellen auf die als Druckausgleichsöffnung dienen. Um einen permanenten Druckausgleich zu erreichen sind in der Regel weitere Druckausgleichsöffnungen notwendig. Dazu werden Löcher im Schulterbereich ausgebildet beispielsweise durch Ultraschall oder durch ein mechanisches Verfahren. Um den Innenbehälter durch diesen Vorgang nicht zu beschädigen muss in einem weiteren Verfahrensschritt zunächst ein Unterdruck angelegt werden, so dass dieser sich zusammenzieht.

Derartige Behälter haben ebenso den Nachteil, dass die Schweißnähte Undichtigkeiten aufzeigen. Ferner ist das Verfahren zum Ausbilden der Löcher die als Druckausgleichöffnungen dienen aufwendig, da zunächst der Innenbehälter kontrahiert werden muss, um Beschädigungen an diesem zu vermeiden. Das Coextrusionsblasverfahren ist dahingehend beschränkt, als dass die verwendeten Kunststoffe zur Bildung von Innen- und Außenbehälter ähnliche Viskositäten und Schmelztemperaturen haben müssen. Ferner können in diesem Verfahren Wandstärken und Innenoberflächen nur indirekt angepasst werden.

Aus der WO 92/12926 A2 ist ein Spenderbehälter gemäß des Oberbegriffs des Anspruchs 1 der vorliegenden Erfindung bekannt.

Es ist die Aufgabe der vorliegenden Erfindung Spenderbehälter weiterzuentwickeln um die vorangehend genannten Nachteile zu überwinden. Des Weiteren ist es die Aufgabe ein Verfahren und eine Vorrichtung zum Herstellen eines solchen Spenderbehälters zu Verfügung zu stellen, welches eine kostengünstige einfache Herstellung und einen große Freiheit zum Design des Spenderbehälters erlaubt.

Die vorliegende Aufgabe wird in einem ersten Aspekt der Erfindung gelöst von einem Spenderbehälter bestehend aus einem Außenbehälter und einem Innenbehälter zum Aufnehmen eines Fluids, wobei der Außenbehälter und der Innenbehälter aus blasgeformten Kunststoffen gebildet sind, die keine stoffschlüssige Verbindung miteinander eingehen und ein erster Kunststoff, aus dem der Innenbehälter gebildet ist, eine höhere Elastizität als ein zweiter Kunststoff, aus dem der Außenbehälter gebildet ist, aufweist, so dass der Innenbehälter durch einen erzeugten Unterdruck verformbar ist, wobei der Spenderbehälter einen Mündungsbereich, einen Mittelbereich und einen Bodenbereich aufweist, und wobei der Außenbehälter wenigstens eine Druckausgleichsöffnung zum Druckausgleich im Bereich zwischen dem Außenbehälter und dem Innenbehälter aufweist, wobei sich der Spenderbehälter sich dahingehend auszeichnet, dass sowohl der Außenbehälter als auch der Innenbehälter einteilig ohne Verbindungsnahtstellen ausgebildet sind.

Durch die einteilige Ausgestaltung weisen sowohl Außenbehälter als auch Innenbeutel eine besondere Dichtigkeit auf. Ferner ist die Belüftungsgeometrie beziehungsweise der Ort an dem die Druckausgleichsöffnungen am Außenbehälter angebracht werden können nicht durch eine Berücksichtigung des Verlaufs einer Schweißnaht eingeschränkt.

Vorteilhafterweise können der erste Kunststoff des Innenbehälters und der zweite Kunststoff des Außenbehälters unterschiedliche Viskositäten und/ oder Schmelztemperaturen aufweisen. Dadurch kann ein breites Spektrum an Kunststoffen miteinander kombiniert werden. Der Kunststoff des Innenbehälters kann an die Anforderungen des aufbewahrten Fluids angepasst werden. Der Kunststoff des Außenbehälters hingegen muss Anforderungen genügen die beispielsweise das optische Erscheinungsbild (Farbe, Transparenz, Glanz), die Haptik der Oberfläche oder die mechanische Festigkeit umfassen.

Das später beschriebene Verfahren zur Herstellung des Spenderbehälters erlaubt eine beliebige Form und Anordnung der Druckausgleichsöffnungen im Außenbehälter. Es ist allerdings vorteilhaft das wenigstens eine Druckausgleichsöffnung im Bodenbereich des Außenbehälters angeordnet ist. In einer bevorzugten Ausführungsform sind zwei Druckausgleichsöffnungen im Bodenbereich angeordnet. Durch diese Ausführungsform ist eine ausreichende Belüftung in dem Bereich zwischen Außenbehälter und Innenbehälter währendes des Zusammenziehens des Innenbehälters gegeben. Dadurch ist ein kontrolliertes Zusammenziehen des Innenbehälters in axialer Richtung entlang der Austrittsrichtung des Fluids möglich.

Es ist vorteilhaft, wenn vor der ersten Benutzung d.h. vor der erstmaligen Verformung bzw. Kontraktion des Innenbehälters die wenigstens eine Druckausgleichsöffnung durch den Bodenbereich des Innenbehälters abgedeckt wird und diese somit verschlossen ist. Dadurch kann ein Eintreten von Fremdstoffen in den Außenbehälter verhindert werden.

In einer weiteren Ausführungsform weist der Innenbehälter außenseitig wenigstens einen Vorsprung auf, der vor der ersten Verformung bzw. Kontraktion in die Druckausgleichsöffnung hineinragt und diese somit verschließt.
Die Wandstärken der Innen- und Außenbehälter können beliebig an die jeweiligen Anforderungen, wie beispielsweise Größe oder mechanische Stabilität angepasst werden. Vorteilhafterweise sind die Wandstärken im Bereich von einigen Mikrometern bis zu einigen Millimetern. Besonders bevorzugt im Bereich von einigen Zehntel-Millimetern.

In einer besonders bevorzugten Ausführungsform ist eine erste Wandstärke im Bodenbereich des Innenbehälters größer als eine zweite Wandstärke der Seitenwände im Mittelbereich des Innenbehälters. Wird nun ein Unterdruck an den Innenbehälter angelegt, so ist durch diese Form ein kontrolliertes faltenbalkartiges Zusammenziehen gewährleistet. Der stabilere Bodenbereich des Innenbehälters wird dabei durch den Unterdruck nicht bzw. nur geringfügig verformt. Die weniger stabil ausgebildeten Seitenwände des Mittelbereichs hingegen verformen sich durch Anlegen des Unterdrucks. Bei einem Pumpvorgang schiebt sich somit der Bodenbereich nach oben und der Innenbehälter zieht sich faltenbalkartig zusammen. Durch ein derartiges Zusammenziehen ist eine sehr geringe im Innenbehälter verbleibende Restmenge an Fluid gewährleistet.

Des Weiteren wäre denkbar die Wandstärke der Seitenwände in bestimmten Bereichen zu verstärken beziehungsweise zu verringern um ein kontrolliertes Kontrahieren zu erreichen.

Die Form des Spenderbehälters kann beliebig ausgestaltet sein und an die jeweiligen Anforderungen angepasst werden. Die Grundfläche des den Spenderbehälter bildenden Hohlkörpers kann beispielsweise kreisförmig, elliptisch, quadratisch, rechteckig oder ein Polygon sein. Ebenso können die Seitenwände des Mittelbereichs beliebig ausgestaltet werden. Denkbar wäre beispielsweise eine geradlinige, eine taillierte oder eine bauchige Form der Seitenwände.

In einer bevorzugten Ausführungsform ist der Mündungsbereich zylinderförmig ausgebildet. Der Mündungsbereich weist dabei einen Umfangsabschnitt und einen Endabschnitt auf, wobei der Endabschnitt in axialer Richtung entlang der Austrittsrichtung des Fluids oberhalb des Umfangsabschnitts liegt. In bevorzugter Weise ist der Endabschnitt flanschförmig ausgebildet. Der Endabschnitt kann dahingehend ausgebildet sein, eine Pumpvorrichtung mit den herkömmlichen Methoden daran zu befestigen. Solche Verbindungsmethoden können beispielsweise Snap-on-, Crimp- oder Schraubverbindungen sein.

Es hat sich als vorteilhaft erwiesen, dass der Innenbehälter in dem Umfangsabschnitt des Mündungsbereichs innerhalb des Außenbehälters und in dem Endabschnitt des Mündungsbereichs in axialer Richtung entlang der Austrittsrichtung des Fluids oberhalb des Außenbehälters angeordnet ist. Durch eine solche Anordnung wird ein besonders stabiler Dichtbereich realisiert. Ferner kann der Innenbehälter durch die Pumpeinrichtung fixiert werden.

In einer weiteren Ausführungsform weist der Außenbehälter an einer Innenwand im Umfangsabschnitt eine Aussparung auf. Der Innenbehälter ragt in diese Aussparung hinein, die somit eine weitere Fixierung für den Innenbeutel darstellt. Der Innenbeutel ist mit anderen Worten in die Aussparung eingeklemmt.

Der Außenbehälter und der Innenbehälter bestehen vorteilhafterweise aus Thermoplasten oder Elastomeren.

Durch das anschließend beschriebene Verfahren können sowohl die innere als auch die äußere Oberfläche speziellen Anforderungen angepasst werden. Die äußere Oberfläche des Außenbehälters kann eine Beschichtung darstellen oder aufweisen, die beispielsweise eine besondere Griffigkeit oder anderweitige haptische Eigenschaften aufweisen. Die Beschichtung kann auch einen Kratzschutz oder einen Schutz vor weiteren äußeren Einflüssen darstellen.

Des Weiteren kann die innere Oberfläche des Innenbehälters eine Beschichtung darstellen oder aufweisen. Diese kann an das in dem Innenbehälter gelagerte Fluid angepasst werden. Denkbar sind beispielsweise antibakterielle oder Sauerstoff undurchlässige Beschichtungen. Durch solche Beschichtungen kann der Einsatz von Konservierungsmitteln reduziert oder gar eliminiert werden. Die Oberflächen des Innenbeutels können so angepasst werden, um medizinische Produkte wie etwa Salzwasserspülungen fachgerecht aufzubewahren. Auch zum Aufbewahren von ätherischen Ölen kann die Oberfläche des Innenbehälters angepasst werden.

Die vorliegende Aufgabe wird in einem weiteren Aspekt der Erfindung gelöst durch ein Spritzblasverfahren zum Herstellen eines Spenderbehälters bestehend aus einem Außenbehälter und einem Innenbehälter zum Aufnehmen eines Fluids und einer entsprechenden Vorrichtung zum Herstellen eines Spenderbehälters im Spritzblasverfahren.

In herkömmlichen Spritzblasverfahren wird zunächst ein Vorformling in einer Vorrichtung hergestellt. In einer weiteren Vorrichtung wird der Vorformling dann zu seiner endgültigen Form expandiert. In dem Spritzblasverfahren der vorliegenden Erfindung wird zunächst in einem ersten Prozessabschnitt ebenso ein Vorformling hergestellt, das Expandieren des Vorformlings in seine endgültige Form erfolgt allerdings in derselben Vorrichtung. In einem derartigen Einstufenprozess kann also der endgültige Spenderbehälter in einer einzigen Vorrichtung hergestellt werden.

Das Spritzblasverfahren umfasst einen ersten Prozessabschnitt, indem ein Vorformling hergestellt wird. Dieser Prozessabschnitt umfasst wiederum mehrere Verfahrensschritte.

In einem ersten Verfahrensschritt wird eine erste Schicht mittels einer Mehrkomponenten-Spritzgussvorrichtung auf einen sich in einer ersten Kavität befindlichen Spritzblaskern, wobei der Innenbehälter des Spenderbehälters aus dieser ersten Schicht geformt wird.

Daraufhin wird der Spritzblaskern mit der sich darauf befindenden ersten Schicht in eine zweite Kavität eingebracht. In diese zweite Kavität kann ein Schieberkern eingeführt werden, der zumindest einen Vorsprung aufweist. Der zumindest eine Vorsprung ragt in die zweite Kavität hinein und berührt die erste Schicht. Daraufhin wird eine zweite Schicht mittels der Mehrkomponenten-Spritzgussvorrichtung auf den sich in der zweiten Kavität befindlichen Spritzblaskern aufgebracht. Diese erste Schicht wird im expandierten Spenderbehälter den Innenbehälter und die zweite Schicht den Außenbehälter bilden. Der Kunststoff der ersten Schicht weist dabei eine höhere Elastizität als der Kunststoff der zweiten Schicht auf, damit der Innenbehälter sich bei Anlegen eines Unterdrucks Zusammenziehen kann. Weiterhin geht der Kunststoff der ersten Schicht keine stoffschlüssige Verbindung mit dem Kunststoff der zweiten Schicht ein.

Durch den sich in der zweiten Kavität befindlichen zumindest einen Vorsprung des Schieberkerns wird beim Einspritzen des zweiten Kunststoffs in die zweite Kavität wenigstens ein Bereich in der zweiten Schicht ausgespart. Dieser zumindest eine ausgesparte Bereich wird im expandierten Außenbehälter eine Druckausgleichsöffnung im Außenbehälter darstellt. Form, Anzahl und die räumliche Anordnung der wenigstens einen Druckausgleichsöffnung wird also durch den wenigstens einen Vorsprung an dem Schieberkern beziehungsweise des Ansatzpunkts des Schieberkerns bestimmt.

In einem weiteren Prozessabschnitt wird der sich auf dem Spritzblaskern befindliche Vorformling, in eine Streckblaseinrichtung eingebracht und dort zu dem Spenderbehälter expandiert. Der Vorformling muss in der Streckblaseinrichtung nicht erwärmt werden, da dieser nach dem Spritzgussprozess eine ausreichende Temperatur für den Streckblasprozess aufweist. Schließlich wird der Spenderbehälter abgekühlt und kann der Vorrichtung entnommen werden.

Vorteilhafter Weise können die Kavitäten bereichsweise mit unterschiedlichen Höhen ausgebildet sein. Dadurch können die Wandstärken der Behälter variiert werden. Es ist beispielsweise denkbar, dass eine erste Wandstärke im Bodenbereich des Innenbehälters größer als eine zweite Wandstärke der Seitenwände im Mittelbereich des Innenbehälters ist. Wird nun ein Unterdruck an den Innenbehälter angelegt so ist durch diese Form ein kontrolliertes faltenbalkartiges Zusammenziehen gewährleistet.

Es ist auch denkbar, dass der Kunststoff der ersten Schicht in dem ersten Prozessabschnitt zum Herstellen des Vorformlings in einem weiteren Verfahrensschritt mittels der Spritzgussvorrichtung in die durch den zumindest einen Vorsprung des Schieberkerns geformte, zumindest eine Druckausgleichöffnung eingespritzt wird und somit ein Vorsprung an der ersten Schicht gebildet wird.

Alternativ kann die Kavität der ersten Schicht bereits wenigstens eine zusätzliche Aussparung aufweisen, so dass an der ersten Schicht außenseitig wenigstens ein Vorsprung ausgebildet ist. Dieser wenigstens eine Vorsprung ragt in dem nächsten Verfahrensschritt in die zweite Kavität hinein, so dass in der zweiten Schicht wenigstens ein Bereich ausgespart wird, welcher die wenigstens eine Druckausgleichsöffnung bildet.

Wie bereits beschrieben kann die Form des Spenderbehälters beliebig ausgestaltet sein und an die jeweiligen Anforderungen angepasst werden. Dies kann durch eine entsprechende Form im Spritzblasprozess erreicht werden. Die Grundfläche des den Spenderbehälter bildenden Hohlkörpers kann beispielsweise kreisförmig, elliptisch, quadratisch, rechteckig oder ein Polygon sein. Ebenso können die Seitenwände des Mittelbereichs beliebig ausgestaltet werden. Denkbar wäre beispielsweise eine taillierte oder eine bauchige Form des Spenderbehälters.

Es hat sich als vorteilhaft erwiesen, dass die Kavität der ersten Schicht so ausgebildet ist, dass der Innenbehälter in dem Umfangsabschnitt des Mündungsbereichs innerhalb des Außenbehälters und in dem Endabschnitt des Mündungsbereichs in axialer Richtung entlang der Austrittsrichtung des Fluids oberhalb des Außenbehälters angeordnet ist. Durch eine solche Anordnung wird ein besonders stabiler Dichtbereich realisiert. Ferner kann der Innenbehälter durch die Pumpeinrichtung fixiert werden.

In einer weiteren Ausführungsform ist die Kavität in die die zweite Schicht gespritzt wird derart ausgebildet, dass der Außenbehälter an einer Innenwand im Umfangsabschnitt eine Aussparung aufweist. Durch den Streckblasprozess wird der Innenbehälter in diese Aussparung gedrückt, die somit eine weitere Fixierung für den Innenbeutel darstellt.

Auch ist das Herstellungsverfahren nicht auf das Ausbilden zweier Schichten beschränkt. Es ist durchaus denkbar den Spenderbehälter mit mehreren Schichten auszustatten. Somit können sowohl die innere als auch die äußere Oberfläche speziellen Anforderungen angepasst werden. Die äußere Oberfläche des Außenbehälters kann eine Beschichtung darstellen oder aufweisen, die beispielsweise eine besondere Griffigkeit oder anderweitige haptische Eigenschaften aufweisen. Die Beschichtung kann auch einen Kratzschutz oder einen Schutz vor weiteren äußeren Einflüssen darstellen. Des Weiteren kann die innere Oberfläche des Innenbehälters eine Beschichtung darstellen oder aufweisen. Diese kann an das in dem Innenbehälter gelagerte Fluid angepasst werden. Denkbar sind beispielsweise antibakterielle oder Sauerstoff undurchlässige Beschichtungen. Durch solche Beschichtungen kann der Einsatz von Konservierungsmitteln reduziert oder gar eliminiert werden. Die Oberflächen des Innenbeutels können so angepasst werden, um medizinische Produkte wie etwa Salzwasserspülungen fachgerecht aufzubewahren. Auch zum Aufbewahren von ätherischen Ölen kann die Oberfläche des Innenbehälters angepasst werden.

Die Aufgabe der vorliegenden Erfindung wird in einem weiteren Aspekt durch eine Vorrichtung zur Herstellung eines Spenderbehälters, bestehend aus einem Außenbehälter und einem Innenbehälter zum Aufnehmen eines Fluids, im vorangehend beschriebenen Spritzblasverfahren zum Spritzgießen eines Vorformlings und zum Streckblasen des Vorformlings innerhalb derselben Vorrichtung. Die Vorrichtung umfasst eine Mehrkomponenten-Spritzgusseinrichtung zum Aufspritzen des aus wenigstens zwei Schichten bestehenden Vorformlings, wobei der Kunststoff der ersten Schicht keine stoffschlüssige Verbindung mit dem Kunststoff der zweiten Schicht eingeht und der Kunststoff der ersten Schicht eine höhere Elastizität als der Kunststoff der zweiten Schicht aufweist. Weiterhin umfasst die Vorrichtung einen Spritzblaskern, auf dem die den Vorformling bildenden Schichten aufgebracht werden, eine erste Kavität zur Bildung der ersten Schicht und eine zweite Kavität zur Bildung einer zweiten Schicht, in welche ein Schieberkern einbringbar ist. Ferner verfügt die Vorrichtung über einen Schieberkern mit zumindest einem Vorsprung, der in die zweite Kavität hineinragt und die erste Schicht berührt, wobei durch den sich in der zweiten Kavität befindlichen zumindest einen Vorsprung des Schieberkerns wenigstens ein Bereich in der zweiten Schicht ausgespart wird, der wenigstens eine Druckausgleichsöffnung im Außenbehälter darstellt. Die Vorrichtung umfasst ebenso eine Streckblaseinrichtung zum Streckblasen des durch einen Spritzgussprozess erwärmten und durch eine zum Streckblasen erforderliche Bearbeitungstemperatur aufweisenden Vorformlings zu dem Spenderbehälter. Schließlich ist eine Kühlvorrichtung und eine Entnahmevorrichtung zum Entnehmen des fertigen Spenderbehälters vorhanden.

In der Druckschrift DE 10 2010 055 822 B4 sind detaillierte Beschreibungen zu finden zum Spritzblasverfahren und der entsprechenden Vorrichtung zu finden. Das Einführen des Schieberkerns wird dort allerdings noch nicht erwähnt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: den Spenderbehälter in einer ersten Ausführungsform vor dem ersten Zusammenziehen des Innenbehälters;
- Fig.1a: den Spenderbehälter in einer ersten Ausführungsform vor dem ersten Zusammenziehen des Innenbehälters in einer detaillierten Ansicht einer Druckausgleichsöffnung im Bodenbereich;
- Fig.1b: den Spenderbehälter in einer ersten Ausführungsform mit einem kontrahierten Innenbeutel;
- Fig.1c: den Spenderbehälter in einer ersten Ausführungsform mit einem kontrahierten Innenbeutel in einer detaillierten Ansicht einer Druckausgleichsöffnung im Bodenbereich;
- Fig.2: den Spenderbehälter in einer zweiten Ausführungsform vor dem ersten Zusammenziehen des Innenbehälters;
- Fig.2a: den Spenderbehälter in einer zweiten Ausführungsform vor dem ersten Zusammenziehen des Innenbehälters in einer detaillierten Ansicht einer Druckausgleichsöffnung im Bodenbereich;
- Fig.2b: den Spenderbehälter in einer zweiten Ausführungsform mit einem kontrahierten Innenbeutel;
- Fig.2c: den Spenderbehälter in einer zweiten Ausführungsform mit einem kontrahierten Innenbeutel in einer detaillierten Ansicht einer Druckausgleichsöffnung im Bodenbereich;
- Fig.3: den Mündungsbereich des Spenderbehälters;
- Fig.4: den Mündungsbereich des Spenderbehälters mit Aussparung;
- Fig.5: den Vorformling in der ersten Kavität;
- Fig.6: den Vorformling in der zweiten Kavität mit Schieberkern;
- Fig.7: Vorrichtung zum Herstellen des Spenderbehälters

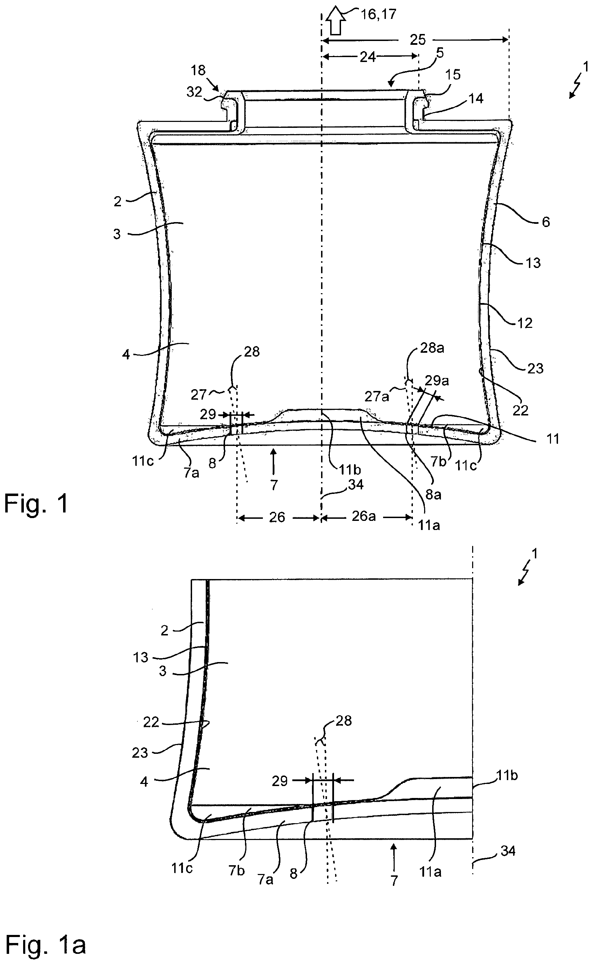

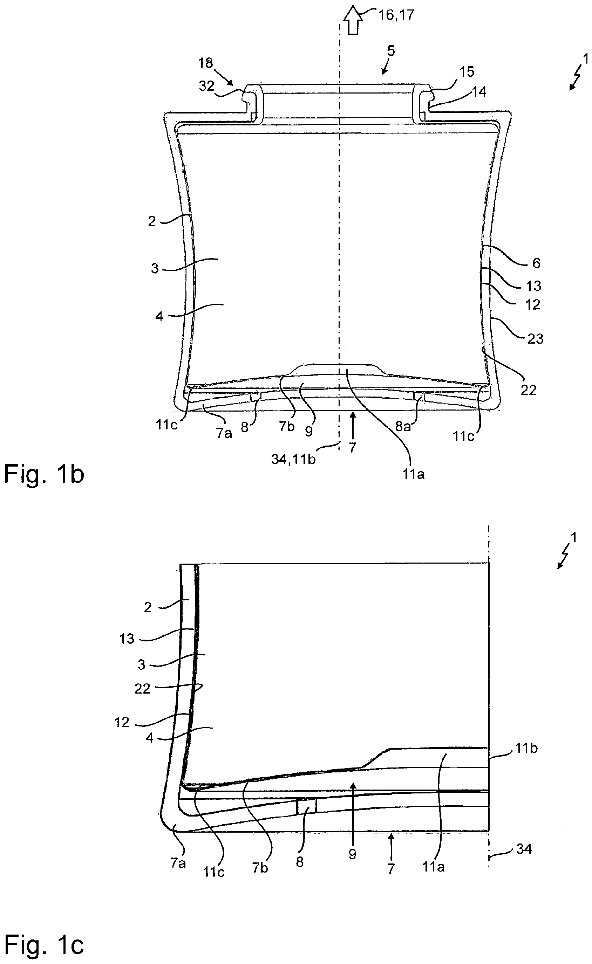

Fig. 1 ist eine Prinzipskizze einer Seitenansicht des Spenderbehälters (1) in einer ersten Ausführungsform. Der Spenderbehälter (1) besteht aus einem Außenbehälter (2) und einem Innenbehälter (3) zum Aufnehmen eines Fluids (4), wobei der Außenbehälter (2) und der Innenbehälter (3) aus blasgeformten Kunststoffen gebildet sind, die keine stoffschlüssige Verbindung miteinander eingehen und ein erster Kunststoff, aus dem der Innenbehälter (3) gebildet ist, eine höhere Elastizität als ein zweiter Kunststoff, aus dem der Außenbehälter (2) gebildet ist, aufweist. Dadurch ist der Innenbehälter (3) durch einen erzeugten Unterdruck verformbar und das Fluid wird dadurch abgegeben. Insbesondere sind sowohl der Außenbehälter (2) als auch der Innenbehälter (3) einteilig ohne Verbindungsnahtstellen ausgebildet.

Der Spenderbehälter (1) weist einen Mündungsbereich (5), einen Mittelbereich (6) und einen Bodenbereich (7) auf. In diesem Ausführungsbeispiel sind der Mittelbereich (6) und der Bodenbereich (7) zylindrisch ausgebildet, wobei der Radius (24) der Zylinderform des Mündungsbereichs (5) kleiner ist als der Radius (25) der Zylinderform des Mittelbereichs (6). Die Erfindung ist allerdings nicht auf diese Form beschränkt. Hohlkörper mit verschiedenen Grundflächen, beispielsweise elliptisch, quadratisch, rechteckig oder polygonartig wären denkbar.

In dem vorliegenden Ausführungsbeispiel ist der Außenbehälter (2) tailliert ausgestaltet, d.h. die äußeren Seitenwände (13) des Mittelbereichs (6) sind konkav in Richtung einer Mittelachse (34) ausgebildet. Selbstverständlich sind auch hier weitere Ausformungen der Seitenwände (13) denkbar, wie beispielsweise eine geradlinige oder eine bauchige Form.

Der Bodenbereich (7) des Spenderbehälters (1) ist in diesem Ausführungsbeispiel konkav in axialer Richtung (16) ausgebildet. Weiterhin sind im Bodenbereich (7a) des Außenbehälters (2) zwei Druckausgleichsöffnungen (8, 8a) mit einem jeweiligen radialen Abstand (26, 26a) zur Mittelachse (34) und mit einem jeweiligen Durchmesser (29, 29a) angeordnet. Vorzugsweise sind die beiden radialen Abstände (26, 26a) und die beiden Durchmesser (29, 29a) gleich. Die Mittelsenkrechte (27, 27a) der Druckausgleichöffnungen (8, 8a) ist dabei in einem Winkel (28, 28a) zur Mittelachse (34) angeordnet.

Vorzugsweise weist der Innenbehälter (3) eine erste Wandstärke (11) im Bodenbereich (7b) auf, die größer ist als eine zweite Wandstärke (12) der Seitenwände (13) des Mittelbereichs (6). Dadurch kann ein faltenbalgartiges Zusammenziehen des Innenbeutels gewährleistet werden. In dem vorliegenden Ausführungsbeispiel weist die erste Wandstärke (11) im Bodenbereich (7b) des Innenbehälters einen trapezförmigen Bereich (11a) auf, dessen Mittelsenkrechte (11 b) auf der Mittelachse (34) des Spenderbehälters (2) liegt. Weiterhin weist die erste Wandstärke (11) einen keilförmigen Bereich (11c) an den radial außenliegenden Bereichen des Bodenbereichs (7b) des Innenbehälters auf. Fig. 1 b zeigt dies in einer detaillierten Ansicht.

Der Bodenbereich (7b) des Innenbehälters (3) deckt die Druckausgleichsöffnungen (8, 8a) im Bodenbereich (7a) des Außenbehälters (2) vor der ersten Verformung des Innenbehälters (3) ab. Nach einem ersten Zusammenziehen des Innenbeutels (3) verlagert sich der Bodenbereich (7b) des Innenbehälters in axialer Richtung (16) entlang der Austrittsrichtung (17) des Fluids (4) nach oben. Die Druckausgleichöffnungen belüften dabei den Bereich (9) zwischen dem Außenbehälter (2) und dem Innenbehälter (3). Dies ist in Fig. 1b gezeigt. Fig. 1c zeigt eine detaillierte Ansicht des Bodenbereichs (7) im Fall eines kontrahierten Innenbeutels (3).

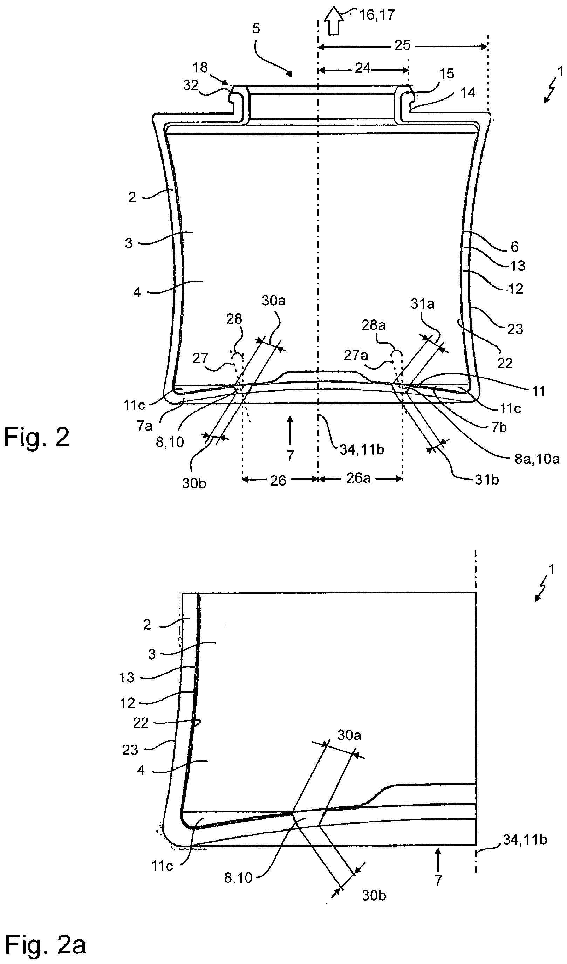

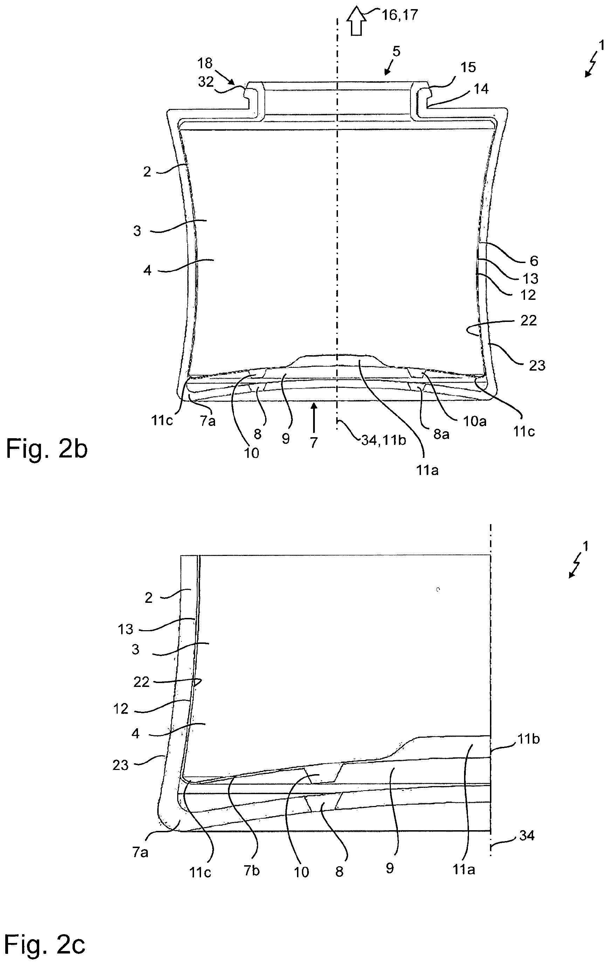

Die Figuren 2 bis 2c zeigen eine weitere Ausführungsform eines Spenderbehälters (1), die im Prinzip der Ausführungsform, welche in den Fig. 1 bis Fig. 1c beschrieben ist, entspricht. Es werden daher im Folgenden nur die Unterschiede zu der vorangehenden Ausführungsform beschrieben. In dieser Ausführungsform weist der Außenbehälter (2) trapezförmige Druckausgleichsöffnungen (8, 8a) auf. Diese sind ebenso mit einem radialen Abstand (26, 26a) zur Mittelachse (34) des Spenderbehälters (1) angeordnet. Die Grundseiten des Trapezes der ersten Druckausgleichöffnung haben die Längen (30a, 30b) und Grundseiten des Trapezes der zweiten Druckausgleichsöffnung haben die Längen (31 a, 31 b). Vorzugsweise sind die radialen Abstände und die Abmessungen der beiden Druckausgleichsöffnungen gleich. Die Mittelsenkrechte (27, 27a) der Druckausgleichöffnungen (8, 8a) ist dabei in einem Winkel (28) zur Mittelachse angeordnet. Der Innenbeutel (3) weist dabei Vorsprünge (10; 10a) auf, die vor der ersten Kontraktion des Innenbehälters (3) in die Druckausgleichsöffnungen (8, 8a) hineinragen und diese ausfüllen. Dies ist in Fig. 2a detailliert gezeigt. Fig. 2b und Fig. 2c zeigen den Spenderbehälter mit einem kontrahierten Innenbehälter (3).

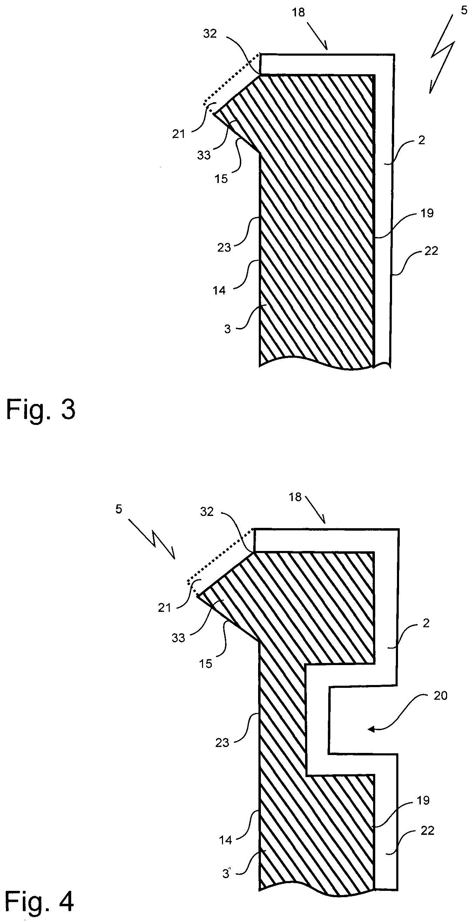

Der Mündungsbereich (5) weist einen Umfangsabschnitt (14) und einen Endabschnitt (15) auf, wobei der Endabschnitt (15) in axialer Richtung (16) entlang der Austrittsrichtung (17) des Fluids (4) oberhalb des Umfangsabschnitts (14) liegt. Fig. 3 zeigt eine detaillierte Seitenansicht des Mündungsbereichs (5). Der Endabschnitt (15) ist bevorzugt flanschförmig ausgebildet. Der Endabschnitt (15) kann dahingehend ausgebildet sein, eine Pumpvorrichtung (nicht gezeigt in den Figuren) mit den herkömmlichen Methoden daran zu befestigen. Solche Verbindungsmethoden können beispielsweise Snap-on-, Crimp- oder Schraubverbindungen sein.

Vorteilhafterweise ist der Innenbehälter (3) in dem Umfangsabschnitt (14) des Mündungsbereichs (5) innerhalb des Außenbehälters (2) angeordnet. Dabei liegt eine Außenwand (30) des Innenbehälters an einer Innenwand (19) des Außenbehälters (2) an. In dem Endabschnitt (15) des Mündungsbereichs (4) hingegen ist der Innenbehälter (2) in axialer Richtung (16) entlang der Austrittsrichtung (17) des Fluids (4) oberhalb des Außenbehälters (2) angeordnet und stellt somit wird einen Dichtbereich (18) dar. Vorzugsweise schließt der Innenbehälter an einer oberen Kante (32) des Außenbehälters, an der der flanschförmige Vorsprung (33) angeordnet ist ab. Der Innenbehälter (3) kann allerdings auch über dem flanschförmigen Vorsprung (33) liegen. Dies ist in Fig. 3 durch die gestrichelte Form (21) dargestellt.

In Fig. 4 ist eine weitere Ausführungsform gezeigt, die im Prinzip der Ausführungsform aus der Fig. 3 entspricht. Im Folgenden werden daher nur die Unterschiede dargelegt. In diesem Ausführungsbeispiel weist im Umfangsabschnitt (14) des Mündungsbereichs (5) eine Innenwand (19) des Außenbehälters (2) eine Aussparung (20) auf. Der Innenbehälter (3) ragt in die Aussparung (20) hinein und somit stellt die Aussparung (20) eine Fixierung des Innenbehälters (3) dar.

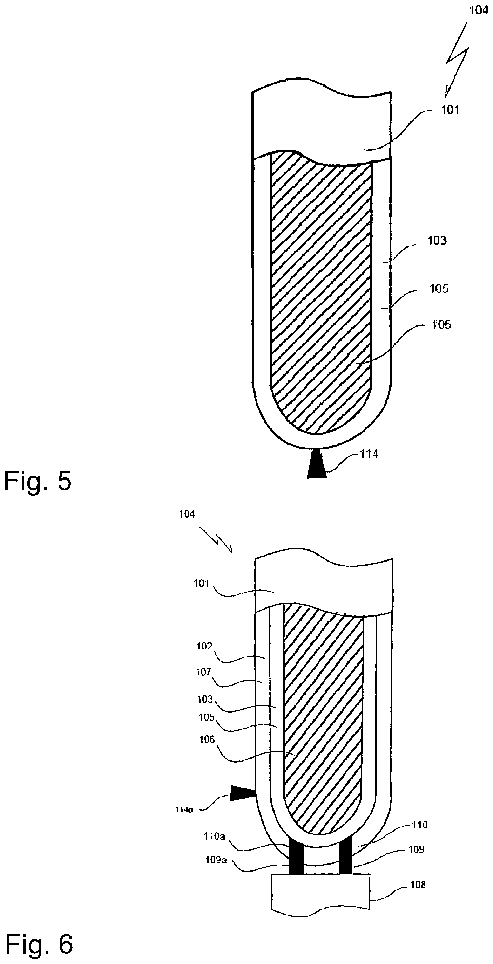

Fig. 5 zeigt einen ersten Teil einer Mehrkomponenten-Spritzgussvorrichtung (104) zum Aufspritzen eines aus wenigstens zwei Schichten (102, 103) bestehenden Vorformlings (101), wobei der Kunststoff der ersten Schicht (103) keine stoffschlüssige Verbindung mit dem Kunststoff der zweiten Schicht (102) eingeht und der Kunststoff der ersten Schicht (103) eine höhere Elastizität als der Kunststoff der zweiten Schicht (102) aufweist. Die Vorrichtung umfasst einen Spritzblaskern (106), der sich in einer ersten Kavität (105) befindet. In diese erste Kavität (105) wird eine erste Schicht (103) durch eine Zuführeinrichtung (114) eingespritzt.

Fig. 6 zeigt eine zweite Kavität (107) der Mehrkomponenten-Spritzgussvorrichtung (104). In dieser zweiten Kavität befindet sich der Spritzblaskern (106) mit der bereits darauf aufgespritzten ersten Schicht (103). Ferner ist ein Schieberkern (108) mit zwei Vorsprüngen (109, 109a) in die zweite Kavität (107) einbringbar, so dass die Vorsprünge (109; 109a) die erste Schicht (103) berühren. Beim Einspritzen des zweiten Kunststoffs in die zweite Kavität (107) durch eine weitere Zuführeinrichtung (114a) werden durch die Vorsprünge des Schieberkerns zwei Bereiche ausgespart (110, 110a), die die Druckausgleichsöffnungen (8, 8a) bilden. Die Erfindung ist nicht auf die in den Figuren 5 und 6 gezeigten Anordnungspunkte der Zuführeinrichtungen (114, 114a) an den jeweiligen Kavitäten (105, 107;) beschränkt.

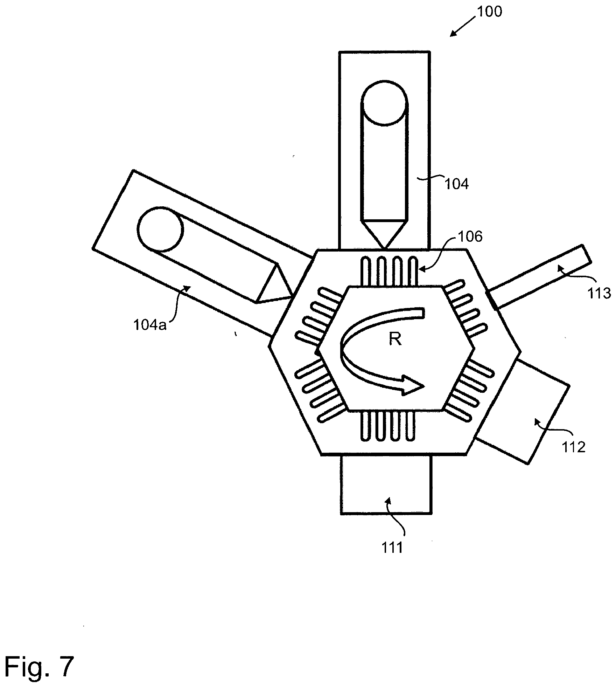

Fig. 7 zeigt schematisch die Vorrichtung (100) zur Herstellung eines Spenderbehälters (1), bestehend aus einem Außenbehälter (2) und einem Innenbehälter (3) zum Aufnehmen eines Fluids (4), im Spritzblasverfahren zum Spritzgießen eines Vorformlings (101) und zum Streckblasen des Vorformlings (101) innerhalb derselben Vorrichtung (100). Neben der Mehrkomponenten Spritzgussvorrichtung (104) die bereits in den Figuren 5 und 6 beschrieben wurde weist die Vorrichtung (100) noch eine Streckblaseinrichtung (111) zum Streckblasen des durch einen Spritzgussprozess erwärmten und eine zum Streckblasen erforderliche Bearbeitungstemperatur aufweisenden Vorformlings (101). Weiterhin sind eine Kühleinrichtung (112) zum Abkühlen des expandierten Spenderbehälters (1) und eine Entnahmeeinrichtung (113) zum Ausführen des endgültigen Spenderbehälters (1) aus der Vorrichtung (100) vorhanden.

### Bezugszeichenliste

- 1: Spenderbehälter
- 2: Außenbehälter
- 3: Innenbehälter
- 4: Fluid
- 5: Mündungsbereich
- 6: Mittelbereich
- 7: Bodenbereich des Spenderbehälters
- 7a: Bodenbereich des Außenbehälters
- 7b: Bodenbereich des Innenbehälters
- 8: Druckausgleichsöffnung
- 8a: weitere Druckausgleichsöffnung
- 9: Bereich zwischen dem Außenbehälter und dem Innenbehälter
- 10: Vorsprung außenseitig am Innenbehälter
- 10a: weiterer Vorsprung außenseitig am Innenbehälter
- 11: erste Wandstärke des Innenbehälters
- 11a: trapezförmiger Bereich der ersten Wandstärke
- 11b: Mittelsenkrechte des trapezförmigen Bereichs
- 11c: keilförmiger Bereich der ersten Wandstärke
- 12: zweite Wandstärke des Innenbehälters
- 13: Seitenwände des Mittelbereichs
- 14: Umfangsabschnitt des Mündungsbereichs
- 15: Endabschnitt des Mündungsbereichs
- 16: axialer Richtung
- 17: Austrittsrichtung des Fluids
- 18: Dichtbereich
- 19: Innenwand des Außenbehälters
- 20: Aussparung
- 21: Weiterführung
- 22: innere Oberfläche des Innenbehälters
- 23: äußere Oberfläche des Außenbehälters
- 24: Radius der Zylinderform des Mündungsbereichs
- 25: Radius der Zylinderform des Mittelbereichs
- 26, 26a: radiale Abstände der jeweiligen Druckausgleichsöffnungen zur Mittelachse d es Spenderbehälters
- 27, 27a: Mittelsenkrechte der Druckausgleichöffnungen
- 28, 28a: Winkel zwischen Mittelsenkrechten der Druckausgleichsöffnung und der Mittelachse des Spenderbehälters
- 29: Durchmesser einer Druckausgleichsöffnung
- 29a: Durchmesser einer weiteren Druckausgleichsöffnung
- 30a,b: Längen der Grundseiten des Trapezes der ersten Druckausgleichöffnung
- 31a,b: Längen der Grundseiten des Trapezes der zweiten Druckausgleichöffnung
- 32: obere Kante des Außenbehälters, an der der flanschförmige Vorsprung angeordnet ist
- 33: flanschförmiger Vorsprung
- 34: Mittelachse
- 101: Vorformling
- 102: zweite Schicht
- 103: erste Schicht
- 104: Spritzgussvorrichtung
- 105: ersten Kavität
- 106: Spritzblaskern
- 107: zweite Kavität
- 108: Schieberkern
- 109: Vorsprung an Schieberkern
- 109a: weiterer Vorsprung an Schieberkern
- 110: ausgesparter Bereich in der zweiten Schicht
- 110a: weiterer ausgesparter Bereich in der zweiten Schicht
- 111: Streckblaseinrichtung
- 112: Kühlvorrichtung
- 113: Entnahmevorrichtung
- 114: Zuführeinrichtung
- 114a: Zuführeinrichtung

## Patentansprüche

1. Spenderbehälter (1) bestehend aus einem Außenbehälter (2) und einem Innenbehälter (3) zum Aufnehmen eines Fluids (4), wobei der Außenbehälter (2) und der Innenbehälter (3) aus blasgeformten Kunststoffen gebildet sind, die keine stoffschlüssige Verbindung miteinander eingehen und ein erster Kunststoff, aus dem der Innenbehälter (3) gebildet ist, eine höhere Elastizität als ein zweiter Kunststoff, aus dem der Außenbehälter (2) gebildet ist, aufweist, so dass der Innenbehälter (3) durch einen erzeugten Unterdruck verformbar ist, wobei der Spenderbehälter (1) einen Mündungsbereich (5), einen Mittelbereich (6) und einen Bodenbereich (7) aufweist, und wobei der Außenbehälter (2) wenigstens eine Druckausgleichsöffnung (8) zum Druckausgleich im Bereich (9) zwischen dem Außenbehälter (2) und dem Innenbehälter (3) aufweist,
**dadurch gekennzeichnet, dass**
sowohl der Außenbehälter (2) als auch der Innenbehälter (3) einteilig ohne Verbindungsnahtstellen ausgebildet sind, wobei der Innenbehälter (3) außenseitig wenigstens einen Vorsprung (10) aufweist, der vor der ersten Verformung des Innenbehälters (3) in die wenigstens eine Druckausgleichsöffnung (8) hineinragt, so dass die Druckausgleichsöffnung (8) verschlossen ist.

2. Spenderbehälter nach Anspruch 1,
**dadurch gekennzeichnet, dass**
der erste Kunststoff des Innenbehälters (2) und der zweite Kunststoff des Außenbehälters (3) unterschiedliche Viskositäten und/ oder Schmelztemperaturen aufweisen.

3. Spenderbehälter nach Anspruch 1 oder 2,
**dadurch gekennzeichnet, dass**
die wenigstens eine Druckausgleichsöffnung (8) im Bodenbereich (7) des Außenbehälters (2) angeordnet ist.

4. Spenderbehälter nach Anspruch 1, 2 oder 3,
**dadurch gekennzeichnet, dass**
der Innenbehälter (3) die wenigstens eine Druckausgleichsöffnung (8) im Außenbehälter (2) vor der ersten Verformung des Innenbehälters (3) abdeckt.

5. Spenderbehälter nach einem der vorhergehenden Ansprüche,
**dadurch gekennzeichnet, dass**
eine erste Wandstärke (11) des Innenbehälters (3) im Bodenbereich (7) größer ist als eine zweite Wandstärke (12) der Seitenwände (13) im Mittelbereich (6) des Innenbehälters (3), so dass bei Erzeugen des Unterdrucks im Innenbehälter (3) ein faltenbalgartiges Zusammenziehen des Innenbehälters erfolgt.

6. Spenderbehälter nach einem der vorhergehenden Ansprüche,
**dadurch gekennzeichnet, dass**
der Mündungsbereich (5) des Spenderbehälters zylinderförmig ausgestaltet ist und einen Umfangsabschnitt (14) und einen Endabschnitt (15) aufweist, wobei der Endabschnitt (15) in axialer Richtung (16) entlang der Austrittsrichtung (17) des Fluids (4) oberhalb des Umfangsabschnitts (14) liegt, und wobei der Endabschnitt (15) des Außenbehälters (2) flanschförmig ausgebildet ist.

7. Spenderbehälter nach Anspruch 6,
**dadurch gekennzeichnet, dass**
der Innenbehälter (3) in dem Umfangsabschnitt (14) des Mündungsbereichs (5) innerhalb des Außenbehälters (2) angeordnet ist und in dem Endabschnitt (15) des Mündungsbereichs (5) in axialer Richtung (16) entlang der Austrittsrichtung (17) des Fluids (4) oberhalb des Außenbehälters (2) angeordnet ist und somit einen Dichtbereich (18) darstellt.

8. Spenderbehälter nach Anspruch 7,
**dadurch gekennzeichnet, dass**
im Umfangsabschnitt (14) eine Innenwand (19) des Außenbehälters (2) eine Aussparung (20) aufweist, wobei der Innenbehälter (3) in die Aussparung (20) hineinragt und somit die Aussparung (20) eine Fixierung des Innenbehälters (3) darstellt.

9. Spenderbehälter nach Anspruch 1,
**dadurch gekennzeichnet, dass**
der Außenbehälter (2) und der Innenbehälter (3) aus Thermoplasten oder Elastomeren bestehen.

10. Spenderbehälter nach einem der vorhergehenden Ansprüche,
**dadurch gekennzeichnet, dass**
die innere Oberfläche (22) des Innenbehälters eine antibakterielle Beschichtung und/ oder eine Sauerstoff undurchlässige Beschichtung aufweist oder darstellt.

11. Spritzblasverfahren zum Herstellen eines Spenderbehälters (1) bestehend aus einem Außenbehälter (2) und einem Innenbehälter (3) zum Aufnehmen eines Fluids (4), wobei in einem ersten Prozessabschnitt ein Vorformling (101) durch folgende Verfahrensschritte hergestellt wird:
a. Aufspritzen einer ersten Schicht (103) mittels einer Mehrkomponenten-Spritzgussvorrichtung (104) auf einen sich in einer ersten Kavität (105) der Mehrkomponenten-Spritzgussvorrichtung (104) befindlichen Spritzblaskern (106), wobei der Innenbehälter (3) des Spenderbehälters aus dieser ersten Schicht (103) geformt wird;
b. Einbringen des Spritzblaskerns (106) mit der sich darauf befindlichen ersten Schicht (103) in eine zweite Kavität (107);
c. Einführen eines Schieberkerns (108) in die zweite Kavität (107), wobei der Schiebekern (108) zumindest einen Vorsprung (109) aufweist, der in die zweite Kavität (107) hineinragt und die ersten Schicht (103) berührt;
d. Aufspritzen einer zweiten Schicht (102) mittels einer Mehrkomponenten-Spritzgussvorrichtung (104) auf den sich in der zweiten Kavität (107) der Mehrkomponenten-Spritzgussvorrichtung (104a) befindlichen Spritzblaskern (106), wobei der Außenbehälter (2) des Spenderbehälters aus dieser zweiten Schicht (102) geformt wird, wobei der Kunststoff der ersten Schicht (103) eine höhere Elastizität als der Kunststoff der zweiten Schicht (102) aufweist und der Kunststoff der ersten Schicht (103) keine stoffschlüssige Verbindung mit dem Kunststoff der zweiten Schicht (102) eingeht, und wobei durch den sich in der zweiten Kavität (107) befindlichen zumindest einen Vorsprung (109) des Schieberkerns (108) wenigstens ein Bereich (110) in der zweiten Schicht ausgespart wird, der eine Druckausgleichsöffnung (8) im Außenbehälter (2) darstellt;
wobei in einem weiteren Prozessabschnitt der sich auf dem Spritzblaskern (106) befindlichen Vorformling (101), der die zum Streckblasen erforderliche Temperatur aufweist, in eine Streckblaseinrichtung (111) eingebracht wird und dort zu dem Spenderbehälter (1) expandiert wird.

12. Vorrichtung (100) zur Herstellung eines Spenderbehälters (1), bestehend aus einem Außenbehälter (2) und einem Innenbehälter (3) zum Aufnehmen eines Fluids (4), im Spritzblasverfahren zum Spritzgießen eines Vorformlings (101) und zum Streckblasen des Vorformlings (101) innerhalb derselben Vorrichtung (100), wobei die Vorrichtung (100) umfasst:
a) eine Mehrkomponenten-Spritzgusseinrichtung (104) zum Aufspritzen des aus wenigstens zwei Schichten (102; 103) bestehenden Vorformlings (101), wobei der Kunststoff der ersten Schicht (103) keine stoffschlüssige Verbindung mit dem Kunststoff der zweiten Schicht (102) eingeht und der Kunststoff der ersten Schicht (103) eine höhere Elastizität als der Kunststoff der zweiten Schicht (102) aufweist;
b) einen Spritzblaskern (106), auf dem die den Vorformling (101) bildenden Schichten (102; 103) aufgebracht werden;
c) eine erste Kavität (105) zur Bildung der ersten Schicht (103);
d) eine zweite Kavität (107) zur Bildung einer zweiten Schicht (102), in welche ein Schieberkern (108) einbringbar ist;
e) ein Schieberkern (108) mit zumindest einem Vorsprung (109), der in die zweite Kavität (107) hineinragt und die erste Schicht (103) berührt, wobei durch den sich in der zweiten Kavität (107) befindlichen zumindest einen Vorsprung (109) des Schieberkerns (108) wenigstens ein Bereich (110) in der zweiten Schicht (102) ausgespart wird, der wenigstens eine Druckausgleichsöffnung (8) im Außenbehälter (2) darstellt;
f) eine Streckblaseinrichtung (111) zum Streckblasen des durch einen Spritzgussprozess erwärmten und durch eine zum Streckblasen erforderliche Bearbeitungstemperatur aufweisenden Vorformlings (101) zu dem Spenderbehälter (1).

## Claims

1. Dispenser container (1) consisting of an outer container (2) and an inner container (3) for receiving a fluid (4), the outer container (2) and the inner container (3) being formed of blow-moulded plastics materials that do not form an integral connection to one another, and a first plastics material of which the inner container (3) is formed having a higher elasticity than a second plastics material of which the outer container (2) is formed, such that the inner container (3) can be deformed by a low pressure that is generated, the dispenser container (1) comprising an outlet region (5), a middle region (6) and a bottom region (7), and the outer container (2) comprising at least one pressure compensation opening (8) for pressure compensation in the region (9) between the outer container (2) and the inner container (3),
**characterised in that**
both the outer container (2) and the inner container (3) are formed in one piece without connection seams, the inner container (3) comprising, on the outer face thereof, at least one projection (10) that projects into the at least one pressure compensation opening (8) before the first deformation of the inner container (3) such that the pressure compensation opening (8) is closed.

2. Dispenser container according to claim 1,
**characterised in that**
the first plastics material of the inner container (2) and the second plastics material of the outer container (3) have different viscosities and/or melting temperatures.

3. Dispenser container according to either claim 1 or claim 2,
**characterised in that**
the at least one pressure compensation opening (8) is arranged in the bottom region (7) of the outer container (2).

4. Dispenser container according to claim 1, 2 or 3,
**characterised in that**
the inner container (3) covers the at least one pressure compensation opening (8) in the outer container (2) before the first deformation of the inner container (3).

5. Dispenser container according to any of the preceding claims,
**characterised in that**
a first wall thickness (11) of the inner container (3) in the bottom region (7) is greater than a second wall thickness (12) of the side walls (13) in the middle region (6) of the inner container (3) such that the inner container contracts in a bellows-like manner when the low pressure is generated in the inner container (3).

6. Dispenser container according to any of the preceding claims,
**characterised in that**
the outlet region (5) of the dispenser container is cylindrical and comprises a peripheral portion (14) and an end portion (15), the end portion (15) being positioned above the peripheral portion (14) in the axial direction (16) along the discharge direction (17) of the fluid (4), and the end portion (15) of the outer container (2) being flange-shaped.

7. Dispenser container according to claim 6,
**characterised in that**
the inner container (3) is arranged, in the peripheral portion (14) of the outlet region (5), within the outer container (2), and is arranged, in the end portion (15) of the outlet region (5), above the outer container (2) in the axial direction (16) along the discharge direction (17) of the fluid (4) and thus constitutes a sealing region (18).

8. Dispenser container according to claim 7,
**characterised in that**
an inner wall (19) of the outer container (2) comprises a recess (20) in the peripheral portion (14), the inner container (3) projecting into the recess (20) and the recess (20) thus constituting a fixation of the inner container (3).

9. Dispenser according to claim 1,
**characterised in that** the outer container (2) and the inner container (3) consist of thermoplastics or elastomers.

10. Dispenser container according to any of the preceding claims,
**characterised in that**
the inner surface (22) of the inner container comprises or constitutes an anti-bacterial coating and/or an oxygen-tight coating.

11. Injection blow moulding method for producing a dispenser container (1) consisting of an outer container (2) and an inner container (3) for receiving a fluid (4), wherein a preform (101) is produced by the following method steps in a first process portion:
a. overmoulding a first layer (103), using a multi-component injection moulding apparatus (104), onto an injection blow moulding core (106) positioned in a first cavity (105) in the multi-component injection moulding apparatus (104), wherein the inner container (3) of the dispenser container is formed from said first layer (103);
b. inserting the injection blow moulding core (106) having the first layer (103) thereon into a second cavity (107);
c. introducing a sliding core (108) into the second cavity (107), wherein the sliding core (108) comprises at least one projection (109) that projects into the second cavity (107) and touches the first layer (103);
d. overmoulding a second layer (102), using a multi-component injection moulding apparatus (104), onto the injection blow moulding core (106) positioned in the second cavity (107) in the multi-component injection moulding apparatus (104a), wherein the outer container (2) of the dispenser container is formed from said second layer (102), wherein the plastics material of the first layer (103) has a higher elasticity than the plastics material of the second layer (102) and the plastics material of the first layer (103) does not form an integral connection to the plastics material of the second layer (102), and wherein at least one region (110) in the second layer is recessed by the at least one projection (109) of the sliding core (108) positioned in the second cavity (107) and constitutes a pressure compensation opening (8) in the outer container (2);
wherein, in a further process portion, the preform (101) positioned on the injection blow moulding core (106) and having the temperature required for stretch blow moulding is inserted into a stretch blow moulding device (111) and is expanded therein so as to form the dispenser container (1).

12. Apparatus (100) for producing a dispenser container (1), consisting of an outer container (2) and an inner container (3) for receiving a fluid (4), in an injection blow moulding method for injection moulding a preform (101) and for stretch blow moulding the preform (101) within the same apparatus (100), wherein the apparatus (100) comprises:
a. a multi-component injection moulding device (104) for overmoulding the preform (101) consisting of at least two layers (102; 103), wherein the plastics material of the first layer (103) does not form an integral connection to the plastics material of the second layer (102) and the plastics material of the first layer (103) has a higher elasticity than the plastics material of the second layer (102);
b. an injection blow moulding core (106) on which the layers (102; 103) forming the preform (101) are applied;
c. a first cavity (105) for forming the first layer (103);
d. a second cavity (107) for forming a second layer (102), into which cavity a sliding core (108) can be inserted;
e. a sliding core (108) having at least one projection (109) that projects into the second cavity (107) and touches the first layer (103), wherein at least one region (110) in the second layer (102) is recessed by the at least one projection (109) of the sliding core (108) positioned in the second cavity (107) and constitutes a pressure compensation opening (8) in the outer container (2);
f. a stretch blow moulding device (111) for stretch blow moulding the preform (101), which has been heated by an injection moulding process and has the temperature required for stretch blow moulding, so as to form the dispenser container (1).

## Revendications

1. Conteneur de distribution (1) se composant d'un conteneur externe (2) et d'un conteneur interne (3) pour l'introduction d'un fluide (4), le conteneur externe (2) et le conteneur interne (3) étant formés à partir de matières plastiques moulées par soufflage, qui n'entrent pas entre elles en liaison par matière et une première matière plastique à partir de laquelle le conteneur interne (3) est formé, présentant une élasticité supérieure à une deuxième matière plastique à partir de laquelle le conteneur externe (2) est formé, de telle sorte que le conteneur interne (3) est déformable par une dépression créée, le conteneur de distribution (1) présentant une zone d'embouchure (5), une zone centrale (6) et une zone de fond (7), et le conteneur externe (2) présentant au moins une ouverture (8) d'équilibrage de pression pour l'équilibrage de pression dans la zone (9) entre le conteneur externe (2) et le conteneur interne (3),
**caractérisé par le fait que**
non seulement le conteneur externe (2) mais encore le conteneur interne (3) sont réalisés d'un seul tenant sans points de soudure de liaison, le conteneur interne (3) présentant du côté extérieur au moins une saillie (10) qui pénètre dans la au moins une ouverture (8) d'équilibrage de pression avant la première déformation du conteneur interne (3), de telle sorte que l'ouverture (8) d'équilibrage de pression est fermée.

2. Conteneur de distribution selon la revendication 1,
**caractérisé par le fait que**
la première matière plastique du conteneur interne (2) et la deuxième matière plastique du conteneur externe (3) présentent des viscosités et/ou des températures de fusion différentes.

3. Conteneur de distribution selon l'une des revendications 1 ou 2,
**caractérisé par le fait que**
la au moins une ouverture (8) d'équilibrage de pression est disposée dans la zone de fond (7) du conteneur externe (2).

4. Conteneur de distribution selon l'une des revendications 1, 2 ou 3,
**caractérisé par le fait que**
le conteneur interne (3) recouvre la au moins une ouverture (8) d'équilibrage de pression dans le conteneur externe (2) avant la première déformation du conteneur interne (3).

5. Conteneur de distribution selon l'une des revendications précédentes,
**caractérisé par le fait que**
une première épaisseur de paroi (11) du conteneur interne (3) dans la zone de fond (7) est supérieure à une deuxième épaisseur de paroi (12) des parois latérales (13) dans la zone centrale (6) du conteneur interne (3), de telle sorte que, lors de la production de la dépression dans le conteneur interne (3), un retrait en forme de soufflet du conteneur interne a lieu.

6. Conteneur de distribution selon l'une des revendications précédentes,
**caractérisé par le fait que**
la zone d'embouchure (5) du conteneur de distribution est conçue en forme de cylindre et présente une section périphérique (14) et une section d'extrémité (15), la section d'extrémité (15) s'étendant en direction axiale (16) le long de la direction de sortie (17) du fluide (4) au-dessus de la section périphérique (14), et la section d'extrémité (15) du conteneur externe (2) étant réalisée en forme de bride.

7. Conteneur de distribution selon la revendication 6,
**caractérisé par le fait que** le conteneur interne (3) est disposé dans la section périphérique (14) de la zone d'embouchure (5) à l'intérieur du conteneur externe (2) et est disposé dans la section d'extrémité (15) de la zone d'embouchure (5) en direction axiale (16) le long de la direction de sortie (17) du fluide (4) au-dessus du conteneur externe (2) et par conséquent constitue une zone d'étanchéité (18).

8. Conteneur de distribution selon la revendication 7,
**caractérisé par le fait que**
dans la section périphérique (14) une paroi interne (19) du conteneur externe (2) présente une cavité (20), le conteneur interne (3) pénétrant dans la cavité (20) et par conséquent la cavité (20) constituant une fixation du conteneur interne (3).

9. Conteneur de distribution selon la revendication 1,
**caractérisé par le fait que**
le conteneur externe (2) et le conteneur interne (3) se composent de matières thermoplastiques ou d'élastomères.

10. Conteneur de distribution selon l'une des revendications précédentes,
**caractérisé par le fait que**
la surface interne (22) du conteneur interne présente ou constitue un revêtement antibactérien et/ou un revêtement imperméable à l'oxygène.

11. Procédé d'injection-soufflage pour fabriquer un conteneur de distribution (1) se composant d'un conteneur externe (2) et d'un conteneur interne (3) pour l'introduction d'un fluide (4), suivant lequel, dans une première section de procédé, une préforme (101) est fabriquée par les étapes de procédé suivantes :
a. injection d'une première couche (103) au moyen d'un dispositif (104) de moulage par injection à plusieurs composants sur un noyau d'injection (106) se trouvant dans une première cavité (105) du dispositif (104) de moulage par injection à plusieurs composants, le conteneur interne (3) du conteneur de distribution étant formé à partir de cette première couche (103) ;
b. introduction du noyau d'injection (106) avec la première couche (103) se trouvant sur celui-ci dans une deuxième cavité (107) ;
c. introduction d'un noyau coulissant (108) dans la deuxième cavité (107), le noyau coulissant (108) présentant au moins une saillie (109), qui pénètre dans la deuxième cavité (107) et touche la première couche (103) ;
d. injection d'une deuxième couche (102) au moyen d'un dispositif (104) d'injection à plusieurs composants sur le noyau d'injection (106) se trouvant dans la deuxième cavité (107) du dispositif (104a) de moulage par injection à plusieurs composants, le conteneur externe (2) du conteneur de distribution étant formé à partir de cette deuxième couche (102), la matière plastique de la première couche (103) présentant une élasticité supérieure à la matière plastique de la deuxième couche (102) et la matière plastique de la première couche (103) n'enttant pas en liaison de matière avec la matière plastique de la deuxième couche (102), et, par la au moins une saillie (109) du noyau coulissant (108) se trouvant dans la deuxième cavité (107), au moins une zone (110) étant ménagée dans la deuxième couche, qui constitue une ouverture (8) d'équilibrage de pression dans le conteneur externe (2) ; où, dans une autre section de procédé, la préforme (101) qui se trouve sur le noyau d'injection (106) et qui présente la température nécessaire pour l'étirage-soufflage est introduite dans un dispositif d'étirage-soufflage (111) et y est expansée jusqu'au conteneur de distribution (1).

12. Dispositif (100) pour la fabrication d'un conteneur de distribution (1), se composant d'un conteneur externe (2) et d'un conteneur interne (3) pour l'introduction d'un fluide (4), dans le procédé d'injection-soufflage pour le moulage par injection d'une préforme (101) et pour l'étirage-soufflage de la préforme (101) à l'intérieur du même dispositif (100), le dispositif (100) comprenant :
a. un dispositif (104) de moulage par injection à plusieurs composants pour l'injection de la préforme (101) se composant d'au moins deux couches (102 ; 103), la matière plastique de la première couche (103) n'entrant pas en liaison de matière avec la matière plastique de la deuxième couche (102) et la matière plastique de la première couche (103) présentant une élasticité supérieure à la matière plastique de la deuxième couche (102) ;
b. un noyau d'injection-soufflage (106), sur lequel les couches (102 ; 103) formant la préforme (101) sont appliquées ;
c. une première cavité (105) pour la formation de la première couche (103) ;
d. une deuxième cavité (107) pour la formation d'une deuxième couche (102), dans laquelle un noyau coulissant (108) est apte à être introduit ;
e. un noyau coulissant (108) ayant au moins une saillie (109), qui pénètre dans la deuxième cavité (107) et touche la première couche (103), où, par la au moins une saillie (109) du noyau coulissant (108) se trouvant dans la deuxième cavité (107), au moins une zone (110) est ménagée dans la deuxième couche (102), qui constitue au moins une ouverture (8) d'équilibrage de pression dans le conteneur externe (2) ;
f. un dispositif d'étirage-soufflage (111) pour l'étirage-soufflage en le récipient de distribution (1) de la préforme (101) chauffée par un procédé de moulage par injection et présentant une température de traitement nécessaire pour l'étiragesoufflage.
